# FASCICULE DE BREVET EUROPEEN

(11) **EP 2 495 142 B1**
(45) Date de publication et mention de la délivrance du brevet: **29.05.2013**
(21) Numéro de dépôt: 12157588.0
(22) Date de dépôt: 29.02.2012
(51) Int. Cl.: B60T 8/00, B64C 25/42

(54) **Architecture de freinage hydraulique pour aéronef**
Layout eines hydraulischen Bremssystems für ein Luftfahrzeug
Hydraulic braking system lay-out for an aircraft

(30) Priorité: 04.03.2011 FR 1151799
(43) Date de publication de la demande: 05.09.2012
(73) Titulaire: Messier-Bugatti-Dowty, 78140 Velizy Villacoublay (FR)
(72) Inventeur: Frank, David, 75013 PARIS (FR)
(74) Mandataire: Parzy, Benjamin Alain

(56) Documents cités:
- EP-A1- 1 205 369
- WO-A1-2004/108496

## Description

### ARRIERE PLAN DE L'INVENTION

L'invention concerne le domaine des architectures de freinage hydraulique pour aéronef permettant de freiner au moins une roue de l'aéronef.

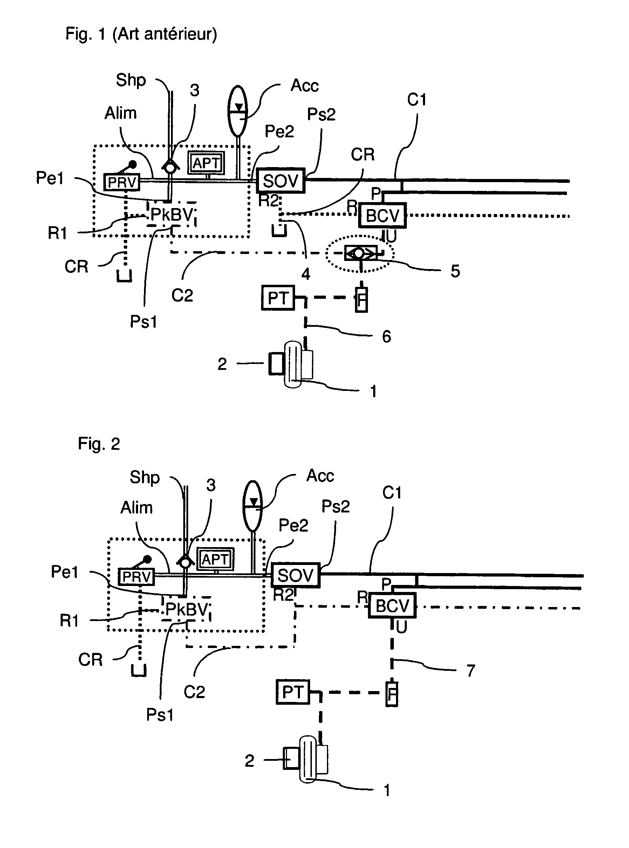

On connaît une architecture de freinage pour roue d'aéronef du type de celle présentée en référence à la figure 1. Cette architecture de l'art antérieur comprend :
- au moins un frein doté d'au moins un actionneur hydraulique de freinage de la roue,
- au moins une source de pression Alim apte à délivrer un fluide hydraulique sous haute pression ; et
- un circuit hydraulique de freinage normal C1.

Ce circuit hydraulique de freinage normal C1 comporte au moins une servovalve de contrôle de pression BCV comportant :
- un port d'alimentation P relié (directement ou indirectement) à la source de pression Alim ;
- un port de retour R ;
- un port d'utilisation U relié à l'actionneur hydraulique de freinage ; et
- un tiroir mobile commandable pour associer le port d'utilisation U au port d'alimentation P et au port de retour R de sorte que la pression dans le port d'utilisation soit égale à une consigne de pression.

L'architecture de freinage de la figure 1 comporte en outre un circuit hydraulique de parc C2 comportant une vanne de parc PkBV ayant un port de sortie Ps1 adapté à être sélectivement connecté soit à la source de pression Alim soit à un circuit de retour CR sous basse pression relativement à ladite haute pression.

La sortie de la vanne de parc et la sortie de la servovalve forment ici les entrées d'un clapet navette dont la sortie est reliée à l'actionneur de freinage.

Ainsi, lorsque l'on veut assurer un freinage de parc, il suffit de manoeuvrer la vanne de parc pour connecter sa sortie à la source d'alimentation. La haute pression est ainsi communiquée en entrée du clapet navette et est transmise à l'actionneur de freinage.

Typiquement la pression du fluide basse pression du circuit de retour est de l'ordre de 5 Bars. Cette pression positive dans le circuit de retour permet de réduire le risque d'apparition de gaz dans le circuit de retour CR. La pression du fluide haute pression de la source d'alimentation Alim est typiquement de 206 Bars.

Un inconvénient d'une telle architecture de freinage de l'art antérieur est d'avoir une partie de l'énergie hydraulique produite au niveau de la source haute pression Alim qui est perdue sous forme de fuites hydrauliques vers le circuit de retour CR.

En particulier, lors de phases de freinage normales (ou de freinage au parc) pendant lesquelles la source de pression est indisponible, la mise en pression du circuit C1 ou du circuit C2 est assurée par un accumulateur. Or, du fait des fuites des équipements du circuit C1, l'accumulateur finit par se vider et ne permet plus d'assurer un niveau de pression suffisant après quelques actionnements des freins. Des architectures de freinage sont connues des documents WO2004/108496 A1 et EP 1 205 369 A1.

### OBJET DE L'INVENTION

L'invention a pour objet de proposer une nouvelle architecture de freinage présentant un niveau de fuite réduit.

### RESUME DE L'INVENTION

En vue de la réalisation de ce but, on propose une architecture de freinage hydraulique pour aéronef, comportant au moins une roue, l'architecture comportant :
- au moins un frein doté d'au moins un actionneur hydraulique de freinage de la roue,
- au moins une source de pression apte à délivrer un fluide hydraulique sous haute pression ; et
- un circuit hydraulique de freinage normal.

Ce circuit hydraulique de freinage normal comportant en outre :
- au moins une servovalve de contrôle de pression comportant :
- un port d'alimentation relié à la source de pression ;
- un port de retour ;
- un port d'utilisation relié à l'actionneur hydraulique de freinage ; et
- un moyen de distribution, comme un tiroir, monté mobile de façon à mettre en relation le port d'utilisation soit avec le port d'alimentation, soit avec le port de retour.

L'architecture de freinage comporte en outre un circuit hydraulique de parc comportant une vanne de parc ayant un port de sortie adapté à être sélectivement connecté soit à la source de pression soit à un circuit de retour sous basse pression relativement à ladite haute pression et le port de sortie de la vanne de parc étant relié au port de retour de la servovalve de contrôle de pression.

Grâce à cette architecture selon l'invention on peut globalement réduire le débit de fuite de l'architecture de freinage. Le débit de fuite est réduit :
- car l'architecture de freinage selon l'invention comporte moins d'équipements successibles de fuir (comme indiqué ci-après l'architecture de l'invention permet de se passer de clapet navette) ; et
- car dans l'architecture de freinage de l'invention, les composants hydrauliques dotés de trois ports sont prioritairement reliés de manière à réduire les situations où les trois ports d'un même composant hydraulique seraient soumis à des pression différentes (sur un composant doté d'au moins trois ports la fuite se produit lorsque les trois ports ne sont plus à équi-pression.

En particulier dans cette architecture la fuite est réduite puisque les ports d'alimentation, d'utilisation et de retour de la servovalve de contrôle de pression peuvent être mis à équi-pression (le débit de fluide hydraulique via le port de retour est ainsi réduit). Etant donné que dans une architecture de freinage d'avion selon l'art antérieur, il y a généralement autant de clapet navette que de roue à freiner (soit au moins 8 roues et 8 clapets navette) l'architecture de freinage selon l'invention est d'autant plus intéressante pour la réduction de fuite. En effet si l'on implémente l'architecture selon l'invention sur un avion doté de 8 roues, on peut potentiellement supprimer 8 clapets navette et réduire grandement la fuite globale.

La réduction de fuite est d'autant plus remarquable lorsqu'on actionne le freinage de parc pour alimenter l'actionneur hydraulique en fluide sous pression via la vanne de parc. La source d'alimentation en fluide hydraulique est alors reliée au port de sortie de la vanne de parc qui, du fait de sa liaison avec le port retour de la servovalve, crée une haute pression au niveau du port de retour de la servovalve de contrôle de pression et empêche la fuite de ce composant.

Un autre avantage de l'invention par rapport à l'architecture de freinage de l'art antérieur de la figure 1 est que l'on peut réaliser le freinage normal (via le seul circuit normal) et de freinage de parc (Via le circuit de parc) sans nécessiter un clapet navette pour sélectionner l'alimentation de l'actionneur via le circuit de freinage normal ou via le circuit de freinage de parc, d'où un gain de masse, de fiabilité générale du système de freinage et un gain économique.

### BREVE DESCRIPTION DES DESSINS

D'autres caractéristiques et avantages de l'invention ressortiront clairement de la description qui en est faite ci-après, à titre indicatif et nullement limitatif, en référence aux dessins annexés, dans lesquels:
- La figure 1 présente une architecture de freinage pour aéronef selon l'art antérieur ;
- La figure 2 présente une architecture de freinage pour aéronef selon l'invention.
- La figure 3 présente une architecture de freinage pour aéronef selon l'invention qui est alternative à celle présentée à la figure 2.

### DESCRIPTION DETAILLEE DE L'INVENTION

On voit sur la figure 1 une architecture de freinage d'aéronef selon l'art antérieur. L'aéronef comporte des atterrisseurs portant des roues dont au moins une roue 1 montée à rotation selon un axe de roue.

Pour freiner la roue 1, on utilise un actionneur hydraulique de freinage 2 doté d'au moins une cavité hydraulique et adapté à presser des disques de rotor assujettis à la roue contre des disques de stator assujettis à une pièce fixe d'atterrisseur de l'aéronef.

Pour des raisons d'efficacité du freinage on cherche à réguler le couple de freinage ou l'effort de freinage lors des phases d'atterrissage ou de roulage. A cette fin on utilise un circuit hydraulique de freinage normal C1 doté d'une servovalve de contrôle de pression BCV permettant une régulation de la pression de fluide délivrée à l'actionneur.

Lorsqu'on parque l'avion, on cherche uniquement à bloquer les freins sans réguler la pression délivrée à l'actionneur 2 ou l'effort de freinage appliqué à la roue 1. Pour cela on utilise non plus le circuit hydraulique de freinage normal C1 mais un circuit hydraulique de freinage de parc C2 qui réalise une mise en pression de l'actionneur de freinage 2 via une vanne de parc PkBV tout ou rien de ce circuit C2.

Chacun des circuits hydrauliques de parc et de freinage normal C1, C2 sont alimentés en fluide hydraulique sous haute pression par une source de pression Alim. Cette source hydraulique de pression Alim comporte une alimentation de fluide hydraulique sous haute pression Shp et un accumulateur Acc de fluide hydraulique sous pression relié à l'alimentation Shp par une canalisation dotée d'un clapet anti retour 3. Ce clapet 3 autorise le passage de fluide de l'alimentation Shp vers l'accumulateur Acc et interdit le passage de fluide hydraulique de l'accumulateur Acc vers l'alimentation de fluide hydraulique haute pression Shp.

Cette alimentation hydraulique Shp a pour fonction de fournir au reste de l'architecture de freinage, un fluide hydraulique sous haute pression. L'accumulateur Acc a pour fonction d'accumuler un volume de fluide sous haute pression fourni par l'alimentation pour le restituer au reste de l'architecture en cas de défaillance ou de non fonctionnement de l'alimentation hydraulique haute pression Shp. Le clapet anti-retour 3 a pour fonction d'éviter un retour de fluide vers l'alimentation hydraulique Shp en particulier dans le cas d'une rupture de tuyauterie sur la ligne haute pression Shp.

La source de pression Alim comporte en outre un limiteur de pression PRV qui est relié d'une part à l'accumulateur Acc et d'autre part à un circuit de retour CR dans lequel se trouve du fluide hydraulique à basse pression. Ce limiteur de pression PRV est adapté pour permettre le passage de fluide hydraulique de la source d'alimentation vers le circuit de retour dans le cas où la pression du fluide dans la source d'alimentation Alim excède une valeur prédéterminée. Le limiteur de pression PRV constitue une sécurité pour éviter un excès de pression de fluide dans l'architecture de freinage. La source hydraulique de pression Alim comporte une sonde de pression APT permettant de mesurer la pression de fluide hydraulique en sortie de l'accumulateur Acc, cette pression correspondant à la pression d'alimentation maximale pouvant être délivrée aux circuits de freinage normal C1 et de freinage de parc C2.

Le circuit hydraulique de freinage normal C1 selon l'art antérieur comporte une vanne de contrôle d'arrivée de fluide SOV ayant un port d'entrée Pe2 relié à la source d'alimentation Alim (en l'occurrence au niveau de l'accumulateur Acc) et un port de sortie Ps2 relié au port d'alimentation P de la servovalve de contrôle de pression BCV.

Cette vanne de contrôle d'arrivée de fluide SOV comporte en outre un port de retour R2 qui est relié au port de retour R de la servovalve de contrôle de pression BCV. Les ports de retour R et R2 sont reliés entre eux et au circuit de retour CR par une canalisation spécifique 4.

Cette vanne de contrôle d'arrivée de fluide SOV est sélectivement placée en configuration d'alimentation du circuit hydraulique de freinage normal C1 ou en configuration de coupure d'alimentation du circuit hydraulique de freinage normal C1.

En configuration d'alimentation du circuit hydraulique de freinage normal C1 :
- la liaison entre ces ports d'entrée Pe2 et de sortie Ps2 de la vanne de contrôle SOV est autorisée ; et
- la liaison du port de retour R2 de la vanne de contrôle d'arrivée de fluide SOV avec ses ports d'entrée Pe2 et de sortie Ps2 est interdite.

En configuration de coupure d'alimentation du circuit hydraulique de freinage normal C1 :
- la liaison entre ces ports d'entrée Pe2 et de sortie Ps2 de la vanne de contrôle SOV est interdite ; et
- la liaison du port de retour R2 de la vanne de contrôle d'arrivée de fluide SOV avec son seul port de sortie Ps2 est autorisée.

Dans la configuration de coupure d'alimentation du circuit hydraulique de freinage normal C1 le circuit hydraulique C1 est mis au retour sur toute sa portion comprise entre la vanne SOV et la servovalve BCV.

La vanne de parc PkBV du circuit de freinage de parc C2 comporte un port de sortie Ps1 adapté à être sélectivement connecté soit à la source de pression Alim, en l'occurrence via un port d'entrée Pe1 de cette vanne de parc PkBV, soit au circuit de retour CR sous basse pression relativement à ladite haute pression. En l'occurrence cette liaison du port de sortie Ps1 de la vanne de parc PkBV au circuit de retour CR se fait via un port retour R1 de la vanne PkBV.

L'alimentation hydraulique de l'actionneur de freinage 2 se fait via un clapet navette 5 comportant une sortie reliée à l'actionneur 5 et deux entrées respectivement reliées port de sortie Ps1 de la vanne de parc PkBV et au port d'utilisation U de la servovalve BCV.

Ce clapet 5 alimente l'actionneur 2 en le reliant à l'entrée du clapet 5 ayant la plus forte pression de fluide.

Suite à la projection de débris de piste ou suite à l'éclatement de pneu, il arrive que des fuites apparaissent entre le clapet navette 5 et l'actionneur de freinage 2.

Afin de réduire le volume de fluide perdu lors d'une telle fuite, l'architecture comporte un fusible F disposé entre le clapet navette 5 et l'actionneur de freinage 2. Ce fusible F est adapté à interdire le passage de fluide du clapet navette 5 vers l'actionneur de freinage 2 lorsqu'une fuite est détectée entre ce fusible F et l'actionneur de freinage 2.

L'architecture de freinage représentée à la figure 2, comporte une source de pression Alim identique à la source de pression Alim déjà décrite en référence à la figure 1. Cette source de pression Alim est aussi reliée au circuit de retour CR sous basse pression de la même manière que sur l'architecture de la figure 1.

Cette architecture de frein selon l'invention comporte différents éléments qui sont identiques à ceux déjà présentés en référence à la figure 1. En l'occurrence on retrouve :
- un frein doté d'au moins un actionneur hydraulique 2 de freinage de la roue 1 ;
- un circuit hydraulique de freinage normal (C1) doté d'une servovalve de contrôle de pression BCV (identique à la servovalve BCV de la figure 1) et d'une vanne de contrôle d'arrivée de fluide SOV (identique à la vanne SOV de la figure 1).

La servovalve BCV utilisée pour la mise en oeuvre de l'architecture de freinage selon l'invention peut être une servovalve du type de celle présentée par le document brevet US 3 856 047. Cette servovalve permet de réguler le déplacement du tiroir en fonction :
- d'une consigne de freinage ; et
- de la pression hydraulique au niveau du port d'utilisation U.

On retrouve également dans l'architecture de freinage selon l'invention un circuit hydraulique de parc C2 comportant une vanne de parc PkBV identique à celle déjà décrite en référence à la figure 1.

Une différence majeure de l'invention par rapport à l'art antérieur de la figure 1 est que le port de sortie Ps1 de la vanne de parc PkBV est relié au port de retour R de la servovalve de contrôle de pression BCV.

Etant donné que le port de retour R de la servovalve BCV n'est plus relié au circuit de retour CR basse pression mais est directement relié au port de sortie Ps1 de la vanne de parc PkBV, il n'est plus nécessaire d'utiliser un clapet navette 5 comme dans la figure 1. Ainsi le port d'utilisation U de la servovalve BCV de la figure 2 est relié à l'actionneur de freinage 2 par une conduite 7 sur laquelle sont seulement placés un fusible F et un capteur de pression PT identiques à ceux de la figure 1.

L'architecture de freinage selon l'invention permet donc d'alimenter l'actionneur de freinage 2 en fluide hydraulique sous pression :
- soit via la servovalve de contrôle de pression BCV sans passer via la vanne de parc PkBV, c'est-à-dire en actionnant le freinage normal ;
- soit via la vanne de freinage PkBV et la servovalve BCV, c'est-à-dire en actionnant le freinage parc.

En positionnant la servovalve BCV de manière à relier son port retour R avec son port d'utilisation U, la source d'alimentation Alim est alors reliée à l'actionneur de freinage 2 via les ports communicants Ps1 et Pe1 de la vanne de parc PkBV et via les ports retour R et d'utilisation U de la servovalve BCV. Par ailleurs le fait que le circuit C2 soit relié au port retour R2 de la vanne de contrôle d'arrivée de fluide SOV fait que lorsque le freinage de parc est actionné, le port R2 est à équipression avec le port Pe2 et Ps2, en l'occurrence à haute pression.

Comme indiqué précédemment la fuite d'un élément hydraulique doté de trois ports (comme la vanne SOV ou la servovalve BCV) existe dès qu'il y a une différence de pression entre deux de ces trois ports. L'architecture de l'invention réduit le risque d'occurrence de ce type de situation. Pour exemple, les fuites de la servovalve de contrôle de pression BCV via le port R sont éliminées en mettant ses trois ports en équipression.

L'architecture de freinage selon l'invention qui comprend un accumulateur Acc et limite la fuite de fluide vers le circuit de retour CR permet d'avoir un gain de masse et de volume car il n'y a plus de clapet navette, et aussi un gain de masse et de volume car l'accumulateur peut être réduit en taille (il y a moins de fuites donc on peut stocker moins de fluide) par rapport à l'architecture de l'art antérieure.

Les normes aéronautiques imposent qu'après un temps donné d'arrêt de l'alimentation hydraulique Shp (en général une durée de 12 heures) l'architecture de freinage puisse fonctionner un certain nombre de fois pour permettre le freinage de la roue 1 sans usage de l'alimentation hydraulique Shp. L'accumulateur Acc est par conséquent dimensionné pour réaliser cette fonction et le fait de limiter la fuite vers le circuit retour permet donc de réaliser cette même fonction de freinage avec défaillance de l'alimentation hydraulique Shp tout en utilisant un accumulateur de taille réduite par rapport à l'art antérieur. On réduit ainsi la masse de fluide hydraulique sous pression à stocker sans affecter la capacité de freinage de l'architecture de freinage.

Enfin on notera que le port d'entrée Pe2 de la vanne de contrôle d'arrivée de fluide SOV est relié à la source d'alimentation Alim (comme sur la figure 1) et son port de sortie Ps2 est relié au port d'alimentation P de la servovalve de contrôle de pression BCV. Par contre le port de retour R2 de la vanne de contrôle d'arrivée de fluide SOV n'est plus relié directement au circuit de retour basse pression CR comme sur la figure 1, mais il est relié au port de sortie Ps1 de la vanne de parc PkBV et au port de retour R de la servovalve de contrôle de pression BCV.

Ainsi on autorise le retour de fluide du port de sortie Ps2 de la vanne de contrôle d'arrivée de fluide SOV vers le circuit de retour CR basse pression via la même canalisation que celle qui relie le port de sortie Ps1 de la vanne de parc PkBV et le port de retour R de la servovalve de contrôle de pression BCV.

Dans ce mode de réalisation, présentant une vanne de contrôle d'arrivée de fluide SOV à trois voies, il est nécessaire de relier son port R2 avec le port de sortie Ps1 de la vanne PkBV et non directement au circuit de retour CR. En effet cette liaison des ports R2 et Ps1 évite le risque de passage de fluide du port R2 vers le circuit de retour lorsque le port R est alimenté en fluide sous pression via la vanne PkBV (c'est-à-dire lors du freinage parc). En effet un tel risque existerait si le port R2 était directement relié au circuit de retour CR car du fluide sous pression pourrait passer du port Ps1 de la vanne PkBV au circuit de retour via les ports R puis P puis Ps2 puis R2 puis CR.

Cette mise au retour de la sortie Ps2 de la vanne de contrôle d'arrivée de fluide SOV est utile lorsque l'on veut limiter la pression dans le circuit de freinage normal pour qu'elle tende vers la basse pression du circuit de retour CR évitant ainsi que les freins puissent être actionnés accidentellement par le circuit de freinage normal.

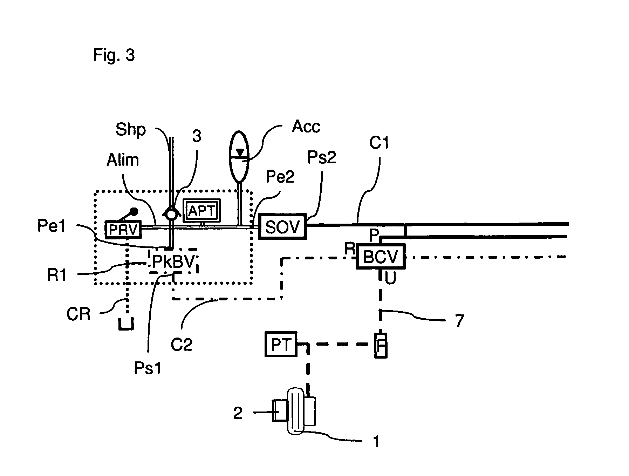

Il est à noter que l'invention comporte un autre mode de réalisation présenté à la figure 3. Dans ce mode de la figure 3, la vanne de contrôle d'arrivée de fluide SOV n'est plus une vanne trois voies avec un port de retour R2 comme sur la figure 2, mais cette vanne SOV est une vanne deux voies ayant un port d'entrée Pe2 et un port de sortie Ps2 et ne comportant pas de port de retour R2. Mis à part cette différence de nature de la vanne SOV, l'architecture de freinage selon le mode de réalisation présenté à la figure 3 est identique à celle présentée en référence à la figure 2.

Dans ce mode de la figure 3, la vanne de contrôle d'arrivée de fluide SOV possède un port d'entrée Pe2 relié à la source d'alimentation Alim et un port de sortie Ps2 relié au port d'alimentation P de la servovalve de contrôle de pression BCV, cette vanne de contrôle d'arrivée de fluide (SOV) adoptant sélectivement :
- une configuration d'alimentation du circuit hydraulique de freinage normal dans laquelle la liaison entre ces ports d'entrée (Pe2) et de sortie (Ps2) de la vanne de contrôle (SOV) est autorisée ; et
- une configuration de coupure d'alimentation du circuit hydraulique de freinage normal dans laquelle la liaison entre ces ports d'entrée Pe2 et de sortie Ps2 de la vanne de contrôle SOV est interdite.

Comme pour le mode de la figure 2, ce mode de réalisation de la figure 3 permet de se passer du clapet navette 5 de l'architecture de la figure 1 et permet également_d'alimenter l'actionneur de freinage 2 en fluide hydraulique sous pression :
- soit via la servovalve de contrôle de pression BCV sans passer via la vanne de parc PkBV, c'est-à-dire en actionnant le freinage normal ;
- soit via la vanne de freinage PkBV et la servovalve BCV, c'est-à-dire en actionnant le freinage parc.

## Revendications

1. Architecture de freinage hydraulique pour aéronef, comportant au moins une roue (1), l'architecture comportant :
- au moins un frein doté d'au moins un actionneur hydraulique de freinage (2) de la roue,
- au moins une source de pression (Alim) apte à délivrer un fluide hydraulique sous haute pression ; et
- un circuit hydraulique de freinage normal (C1) comportant :
- au moins une servovalve de contrôle de pression (BCV) comportant :
- un port d'alimentation (P) relié à la source de pression (Alim) ;
- un port de retour (R) ;
- un port d'utilisation (U) relié à l'actionneur hydraulique de freinage ; et
- un moyen de distribution monté mobile de façon à mettre en relation le port d'utilisation (U) soit avec le port d'alimentation (P), soit avec le port de retour (R) ;
- l'architecture de freinage comportant en outre un circuit hydraulique de parc (C2) comportant :
- une vanne de parc (PkBV) ayant un port de sortie (Ps1) adapté à être sélectivement connecté soit à la source de pression (Alim) soit à un circuit de retour (CR) sous basse pression relativement à ladite haute pression ;
**caractérisé en ce que** le port de sortie (Ps1) de la vanne de parc (PkBV) est relié au port de retour (R) de la servovalve de contrôle de pression (BCV).

2. Architecture de freinage selon la revendication 1, dans laquelle la source de pression (Alim) comporte une alimentation de fluide hydraulique sous haute pression par rapport à ladite basse pression et un accumulateur de fluide hydraulique sous pression (Acc) reliés entre eux par une canalisation dotée d'un clapet anti retour (3) autorisant le passage de fluide de la source de pression (Alim) vers l'accumulateur et interdisant le passage de fluide hydraulique de l'accumulateur (Acc) vers la source de pression (Alim).

3. Architecture de freinage selon la revendication 1, dans laquelle le circuit hydraulique de freinage normal (C1) comporte une vanne de contrôle d'arrivée de fluide (SOV) ayant un port d'entrée (Pe2) relié à la source d'alimentation (Alim) et un port de sortie (Ps2) relié au port d'alimentation (P) de la servovalve de contrôle de pression (BCV), la vanne de contrôle d'arrivée de fluide (SOV) comportant en outre un port de retour (R2) relié au port de sortie (Ps1) de la vanne de parc (PkBV) et au port de retour (R) de la servovalve de contrôle de pression (BCV), cette vanne de contrôle d'arrivée de fluide (SOV) adoptant sélectivement :
- une configuration d'alimentation du circuit hydraulique de freinage normal dans laquelle :
- la liaison entre ces ports d'entrée (Pe2) et de sortie (Ps2) de la vanne de contrôle (SOV) est autorisée ; et
- la liaison du port de retour (R2) de la vanne de contrôle d'arrivée de fluide (SOV) avec ses ports d'entrée (Pe2) et de sortie (Ps2) est interdite ; et
- une configuration de coupure d'alimentation du circuit hydraulique de freinage normal dans laquelle :
- la liaison entre ces ports d'entrée (Pe2) et de sortie (Ps2) de la vanne de contrôle (SOV) est interdite ; et
- la liaison du port de retour (R2) de la vanne de contrôle d'arrivée de fluide (SOV) avec son seul port de sortie (Ps2) est autorisée.

4. Architecture de freinage selon la revendication 1, dans laquelle le circuit hydraulique de freinage normal (C1) comporte une vanne de contrôle d'arrivée de fluide (SOV) ayant un port d'entrée (Pe2) relié à la source d'alimentation (Alim) et un port de sortie (Ps2) relié au port d'alimentation (P) de la servovalve de contrôle de pression (BCV), cette vanne de contrôle d'arrivée de fluide (SOV) adoptant sélectivement :
- une configuration d'alimentation du circuit hydraulique de freinage normal dans laquelle la liaison entre ces ports d'entrée (Pe2) et de sortie (Ps2) de la vanne de contrôle (SOV) est autorisée ; et
- une configuration de coupure d'alimentation du circuit hydraulique de freinage normal dans laquelle la liaison entre ces ports d'entrée (Pe2) et de sortie (Ps2) de la vanne de contrôle (SOV) est interdite.

## Patentansprüche

1. Hydraulische Bremsanordnung für ein Luftfahrzeug, das mindestens ein Rad (1) umfasst, wobei die Anordnung umfasst:
- mindestens eine Bremse, die mit mindestens einem hydraulischen Stellglied zur Bremsung (2) des Rades versehen ist,
- mindestens eine Druckquelle (Alim), die ein Hydraulikfluid unter hohem Druck liefern kann; und
- einen Hydraulikkreislauf zur normalen Bremsung (C 1), umfassend:
- mindestens ein Servoventil zur Drucksteuerung (BCV), umfassend:
- einen Versorgungsanschluss (P), der mit der Druckquelle (Alim) verbunden ist;
- einen Rückführungsanschluss (R);
- einen Nutzungsanschluss (U), der mit dem hydraulischen Bremsstellglied verbunden ist; und
- ein Verteilmittel, das beweglich derart angeordnet ist, dass der Nutzungsanschluss (U) entweder mit dem Versorgungsanschluss (P) oder mit dem Rückführungsanschluss (R) zur Verbindung gebracht wird;
- wobei die Bremsanordnung des Weiteren einen Hydraulikkreislauf zum Parken (C2) umfasst, umfassend:
- ein Parkventil (PkBV) mit einem Ausgangsanschluss (Ps1), der selektiv entweder mit der Druckquelle (Alim) oder mit einer Rückleitung (CR) verbunden werden kann, deren Druck relativ zu besagtem hohen Druck niedrig ist;
**dadurch gekennzeichnet, dass** der Ausgangsanschluss (Ps1) des Parkventils (PkBV) mit dem Rückführungsanschluss (R) des Servoventils zur Drucksteuerung (BCV) verbunden ist.

2. Bremsanordnung nach Anspruch 1, bei der die Druckquelle (Alim) eine Zuführleitung für die Zuführung von Hydraulikfluid unter relativ zu besagtem Niedrigdruck hohem Druck und einen Akkumulator mit Druckfluid (Acc) umfasst, die untereinander über einen Kanal verbunden sind, der mit einem Rückschlagventil (3) versehen ist, wobei das Rückschlagventil den Durchfluss von Fluid der Druckquelle (Alim) zum Akkumulator ermöglicht und den Durchfluss von Hydraulikfluid des Akkumulators (Acc) zur Druckquelle (Alim) verhindert.

3. Bremsanordnung nach Anspruch 1, bei der der Hydraulikkreislauf zur normalen Bremsung (C1) ein Steuerventil zur Steuerung der Fluidzufuhr (SOV) umfasst, das einen Eingangsanschluss (Pe2), der mit der Versorgungsquelle (Alim) verbunden ist, und einen Ausgangsanschluss (Ps2) hat, der mit dem Versorgungsanschluss (P) des Servoventils zur Drucksteuerung (BCV) verbunden ist, wobei das Steuerventil zur Steuerung der Fluidzufuhr (SOV) des Weiteren einen Rückführungsanschluss (R2) umfasst, der mit dem Ausgangsanschluss (Ps1) des Parkventils (PkBV) und dem Rückführungsanschluss (R) des Servoventils zur Drucksteuerung (BVC) verbunden ist, wobei dieses Steuerventil zur Steuerung der Fluidzufuhr (SOV) selektiv annimmt:
- eine Konfiguration zur Versorgung des Hydraulikkreislaufs für die normale Bremsung, bei der:
- die Verbindung zwischen diesem Eingangsanschluss (Pe2) und diesem Ausgangsanschluss (Ps2) des Steuerventils (SOV) autorisiert ist; und
- die Verbindung des Rückführungsanschlusses (R2) des Steuerventils zur Steuerung der Fluidzufuhr (SOV) mit seinem Eingangsanschluss (Pe2) und Ausgangsanschluss (Ps2) nicht zulässig ist; und
- eine Konfiguration zur Versorgungsunterbrechung des Hydraulikkreislaufs zur normalen Bremsung, bei der:
- die Verbindung zwischen diesem Eingangsanschluss (Pe2) und diesem Ausgangsanschluss (Ps2) des Steuerventils (SOV) nicht zulässig ist; und
- die Verbindung des Rückführungsanschlusses (R2) des Steuerventils zur Steuerung der Fluidzufuhr (SOV) mit seinem einzigen Ausgangsanschluss (Ps2) autorisiert ist.

4. Bremsanordnung nach Anspruch 1, bei der der Hydraulikkreislauf zur normalen Bremsung (C1) ein Steuerventil zur Steuerung der Fluidzufuhr (SOV) umfasst, das einen Eingangsanschluss (Pe2), der mit der Versorgungsquelle (Alim) verbunden ist, und einen Ausgangsanschluss (Ps2) hat, der mit dem Versorgungsanschluss (P) des Servoventils zur Drucksteuerung (BCV) verbunden ist, wobei dieses Ventil zur Steuerung der Fluidzufuhr (SOV) selektiv annimmt:
- eine Konfiguration zur Versorgung des Hydraulikkreislaufs für die normale Bremsung, bei der die Verbindung zwischen diesem Eingangsanschluss (Pe2) und diesem Ausgangsanschluss (Ps2) des Steuerventils (SOV) autorisiert ist;
und
- eine Konfiguration zur Versorgungsunterbrechung des Hydraulikkreislaufs für die normale Bremsung, bei der die Verbindung zwischen diesem Eingangsanschluss (Pe2) und diesem Ausgangsanschluss (Ps2) des Steuerventils (SOV) nicht zulässig ist;

## Claims

1. Hydraulic brake architecture for aircrafts, including at least one wheel, the architecture including:
- at least one brake provided with at least one hydraulic actuator for braking the wheel,
- at least one pressure source (Alim) adapted to deliver a hydraulic fluid at high pressure; and
- a normal braking hydraulic circuit (C1) including:
- at least one pressure control servo valve (BCV) including:
- a supply port (P) connected to the pressure source (Alim);
- a return port (R);
- a utilization port (U) connected to the braking hydraulic actuator; and
- distribution means mounted so as to be mobile so as to connect the utilization port (U) either with the supply port (P) or with the return port (R);
- the brake architecture further including a parking hydraulic circuit (C2) including:
- a parking brake valve (PkBV) having an outlet port (Ps1) adapted to be connected selectively either to the pressure source (Alim) or to a return circuit (CR) at a pressure that is low relative to said high pressure;
**characterized in that** the outlet port (Ps1) of the parking brake valve (PkBV) is connected to the return port (R) of the pressure control servo valve (BCV).

2. Brake architecture according to Claim 1, wherein the pressure source (Alim) includes a supply of hydraulic fluid at a pressure that is high relative to said low pressure (Acc) and an accumulator of hydraulic fluid under pressure connected together by a pipe provided with a check valve (3) allowing fluid to pass from the pressure source (Alim) toward the accumulator and preventing hydraulic fluid from passing from the accumulator (Acc) toward the pressure source (Alim).

3. Brake architecture according to Claim 1, wherein the normal braking hydraulic circuit (C1) includes a fluid inlet control valve (SOV) having an inlet port (Pe2) connected to the supply source (Alim) and an outlet port (Ps2) connected to the supply port (P) of the pressure control servo valve (BCV), the fluid inlet control valve (SOV) further including a return port (R2) connected to the outlet port (Ps1) of the parking brake valve (PkBV) and to the return port (R) of the pressure control servo valve (BCV), this fluid inlet control valve (SOV) selectively adopting:
- a configuration of supplying the normal braking hydraulic circuit in which:
- the connection between the inlet port (Pe2) and the outlet port (Ps2) of the control valve (SOV) is allowed; and
- the connection of the return port (R2) of the fluid inlet control valve (SOV) with its inlet port (Pe2) and outlet port (Ps2) is not allowed; and
- a configuration of cutting off the supply of the normal braking hydraulic circuit in which:
- the connection between the inlet port (Pe2) and the outlet port (Ps2) of the control valve (SOV) is not allowed; and
- the connection of the return port (R2) of the fluid inlet control valve (SOV) with its only outlet port (Ps2) is allowed.

4. Brake architecture according to Claim 1, wherein the normal braking hydraulic circuit includes a fluid inlet control valve (SOV) having an inlet port (Pe2) connected to the supply source (Alim) and an outlet port (Ps2) connected to the supply port (P) of the pressure control servo valve (BCV), this fluid inlet control valve (SOV) selectively adopting:
- a configuration of supplying the normal braking hydraulic circuit in which the connection between the inlet valve (Pe2) and the outlet valve (Ps2) of the control valve (SOV) is allowed; and
- a configuration of cutting off the supply of the normal braking hydraulic circuit in which the connection between the inlet port (Pe2) and the outlet port (Ps2) of the control valve (SOV) is not allowed.
